# EUROPEAN PATENT SPECIFICATION

(11) **EP 1 740 854 B1**
(45) Date of publication and mention of the grant of the patent: **21.01.2009**
(21) Application number: 05741321.3
(22) Date of filing: 27.04.2005
(51) Int. Cl.: F16J 1/16

(54) **METHOD FOR THE PRODUCTION OF A PISTON PIN**
VERFAHREN ZUR HERSTELLUNG EINES KOLBENBOLZENS
PROCEDE DE PRODUCTION D'UN AXE DE PISTON

(30) Priority: 29.04.2004 US 835800
(43) Date of publication of application: 10.01.2007
(73) Proprietor: MAHLE GMBH, D-70376 Stuttgart (DE)
(72) Inventor: LETTMANN, Markus, Northville, MI 48167 (US); ROTH, David, Bernard c/o MAHLE International GmbH, 70376 Stuttgart (DE); GLAS, Thomas, Plymouth, MI 48170 (US); SCHNEIDER, Norbert, South Lyon, MI 48178 (US); NGUYEN, Giang, The, Northville, MI 48167 (US); CONSENTINO, Rodrigo, Jose, CEP-13807-030 Mogi Mirim (BR)
(74) Representative: Pohle, Reinhard
(86) International application number: PCT/EP2005/004483
(87) International publication number: WO 2005/106292

(56) References cited:
- GB-A- 191 217 227
- US-A- 1 742 015
- US-A- 3 882 942
- PATENT ABSTRACTS OF JAPAN vol. 015, no. 069 (M-1083), 19 February 1991 (1991-02-19) & JP 02 296075 A (MAZDA MOTOR CORP), 6 December 1990 (1990-12-06)

## Description

### BACKGROUND OF THE INVENTION

### 1. Field of the Invention

The present invention relates to a method and a device for the production of a piston pin having a hard peripheral area.

### 2. The Prior Art

It is known from the state of the art to manufacture piston pins having a peripheral area that has sufficiently great hardness that the use of bearing shells may be eliminated. Offenlegungsschrift DE 197 04 224 describes a cylindrical piston pin whose mantle surface has a layer of amorphous carbon. This piston pin is directly mounted in the eye of the connecting rod and in the pin boss of the piston, avoiding slide bearing shells.

From U.S. Patent No. 1,742,015, it is known to encase a steel tube in order to produce a piston pin, after which the casting material is hardened by means of rapid cooling, using a cooling mantle that is supplied with a coolant.

From the British Patent No. 17,227 it is known to cast iron rolls by using a mould, wherein adjacent to the parts of the rolls at which a hard wearing surface is required a number of metal segments are arranged. These segments are shaped to correspond with the configuration of the portion of the casting to be chilled; and such segments are covered with a relatively thin coating of sand. By varying the thickness of the sand of the metal segments the relative amounts of hardness and toughness of the surface of the rolls can be varied to meet any particular requirement.

From the U. S. Patent No. 3,882,942 a mould for forming a cavity for vertically casting a rolling mill roll is known, which has a central body portion separating upper and lower journal portion, and which has a metal chill to contact the central body portion. The metal chill is a hollow cylinder with a straight face forming the inside wall of the mold. A second metal chill having a facing of sand thereon contacts the vertical section of the lower journal portion. And a third metal chill having a continuous flat upper face and a facing of sand thereon contacts the horizontal terminus of the lower journal portion.

The methods for the production of piston pins having a hardened outside surface known from the state of the art have the disadvantage that they are very complicated and costly.

### SUMMARY OF THE INVENTION

It is an object of the present invention to provide a method for producing a piston pin that has a hard surface, which can be carried out simply and therefore inexpensively.

These and other problems are solved by a chill casting method according to claim 1.

In another aspect, a device is provided for implementing the method according to the invention in which the casting mold is a sand mold. Practical further developments are discussed below.

### BRIEF DESCRIPTION OF THE DRAWINGS

Other objects and features of the present invention will become apparent from the following detailed description considered in connection with the accompanying drawings. It should be understood, however, that the drawings are designed for the purpose of illustration only and not as a definition of the limits of the invention.

In the drawings,
FIG. 1 is a cross-sectional view through a sand mold having a chill form, filled with cast iron that has already solidified, for the production of a piston pin;
FIG. 2 is a side view of an embodiment of a chill form made up of two half-shells, for the simultaneous production of two piston pins;
FIG. 3 is a cross-sectional view of the chill form along the line III-III in FIG. 2;
FIG. 3A is a perspective view of another embodiment of a chill form; and
FIG. 4 are micrographs of the piston pin, to show the structure of the cast material in the peripheral area and the inner region of the pin.

### DETAILED DESCRIPTION OF PREFERRED EMBODIMENTS

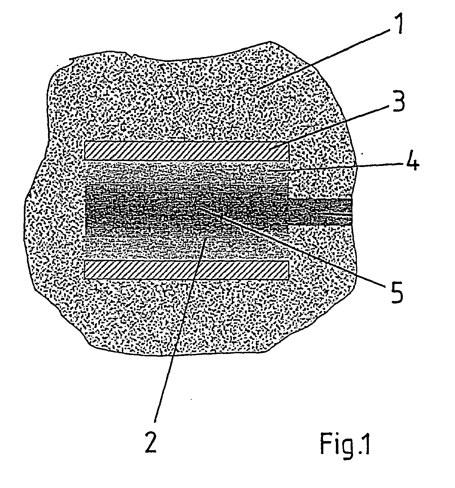

Turning now in detail to the drawings, FIG. 1 shows part of a sand mold 1 for casting a cylinder-shaped piston pin, into which a chill form 3 in the form of a cylindrical tube is embedded, which has a mold cavity for a piston pin. The casting method that can be carried out with this mold is called the chill casting method.

Sand mold 1 is shown with a completed, cast piston pin 2 after solidification, whereby the peripheral area 4 of piston pin 2 solidifies in a white color, because of the rapid cooling effected by chill form 3, and its inner region 5, which cools more slowly than peripheral area 4, assumes a dark color. Subsequent to the casting process, after the casting has been removed from chill form 3, its mantle surface is finished in conventional manner, i.e. it is ground and polished.

A ledeburite structure having a marked carbide texture forms in peripheral area 4, within the scope of the casting process, because of the high cooling speed, giving this region great hardness and wear resistance. Inner region 5 of piston pin 2 does not assume the hardness achieved by peripheral area 4. Because of the lower cooling speed, a pearlite structure is formed at inner region 5, in which the carbon is at least partially present as graphite. This graphite gives the inner region its dark color.

In this connection, cast iron with spheroidal graphite is used, i.e. an iron/carbon casting material whose carbon content, which is present as graphite, is present almost entirely in essentially spheroid, i.e. in spherolitic form.

Such cast parts have a hard, wear-resistant surface and improved ductility in the core and, therefore, can absorb shock and impact stress to a higher degree.

Examples of such chemical compositions of the cast iron are:
Material example a):
   3.4 to 3.9 wt.-% carbon (C)
   1.7 to 2.6 wt.-% silicon (Si)
   0.2 to 0.4 wt.-% manganese (Mn)
   0 to 0.1 wt.-% phosphorus (P)
   0.03 to 0.08 wt.-% magnesium (Mg)
   0 to 0.015 wt.-% sulfur (S);
Material example b):
   3.0 to 3.8 wt.-% carbon (C)
   1.2 to 1.6 wt.-% silicon (Si)
   0.2 to 1.0 wt.-% manganese (Mn)
   0 to 0.1 wt.-% phosphorus (P)
   0.2 to 1.0 wt.-% copper (Cu)
   0.2 to 0.4 wt.-% molybdenum (Mo)
   0 to 0.02 wt.-% sulfur (S).

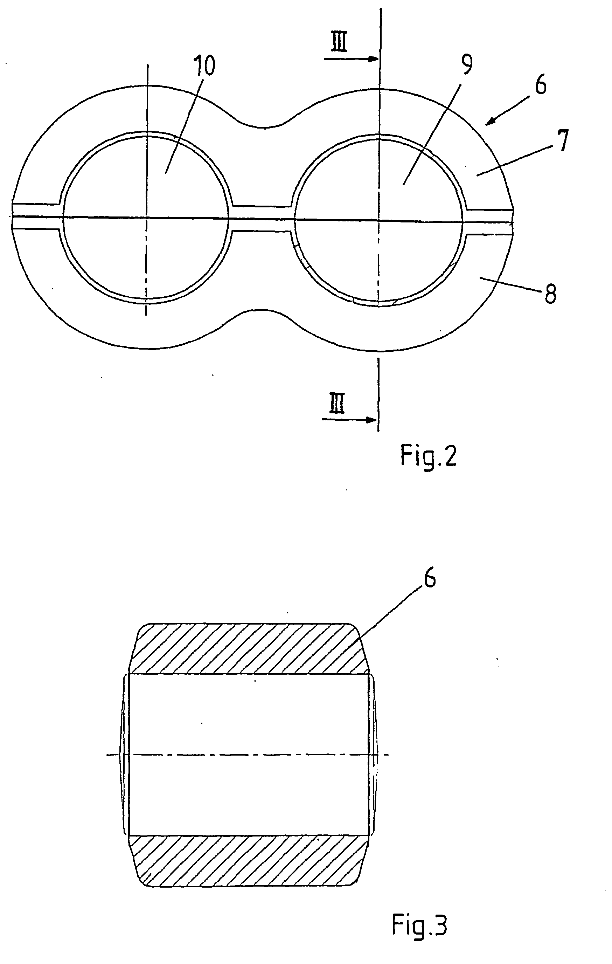

FIG. 2 shows another embodiment of a chill form 6, in a side view; it is made up of two half-shells 7 and 8 that are "E"-shaped in cross-section, which form mold cavities 9, 10 for two piston pins to be produced by them, when their faces are laid onto one another. Chill form 6 is made of a material with high thermal conductivity, for example gray cast iron.

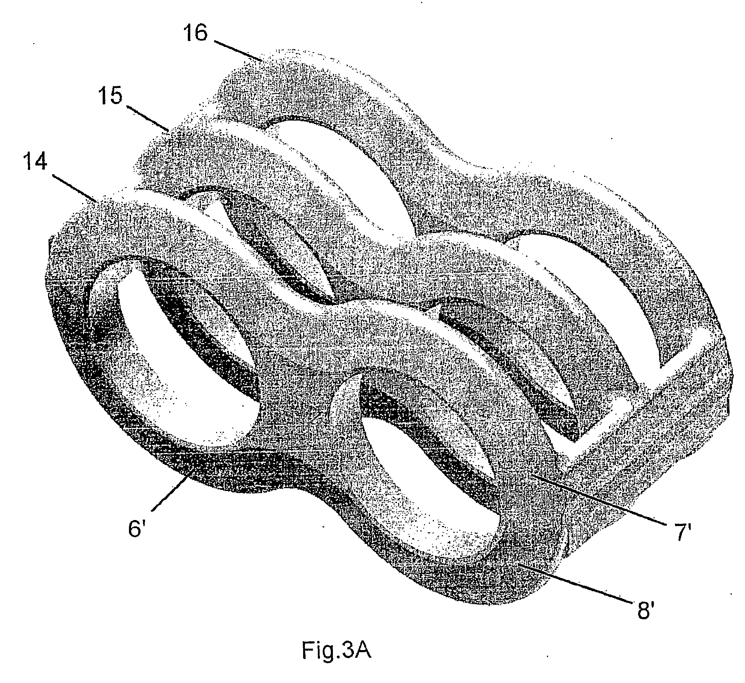

FIG. 3 shows chill form 6 in cross-section along the line III-III in FIG. 2.

FIG. 3A shows another embodiment of a chill form 6' made up of two "E"-shaped half shells 7' and 8', in section. The hollow cylinder-shaped chill .form 6' has webs at its two ends. 14, 16 and in its center region 15. This configuration creates a piston pin with a hard, wear-resistant peripheral area in the center, forming the contact region piston pin/connecting rod, and at its two ends, forming the contact region piston pin/pin boss.

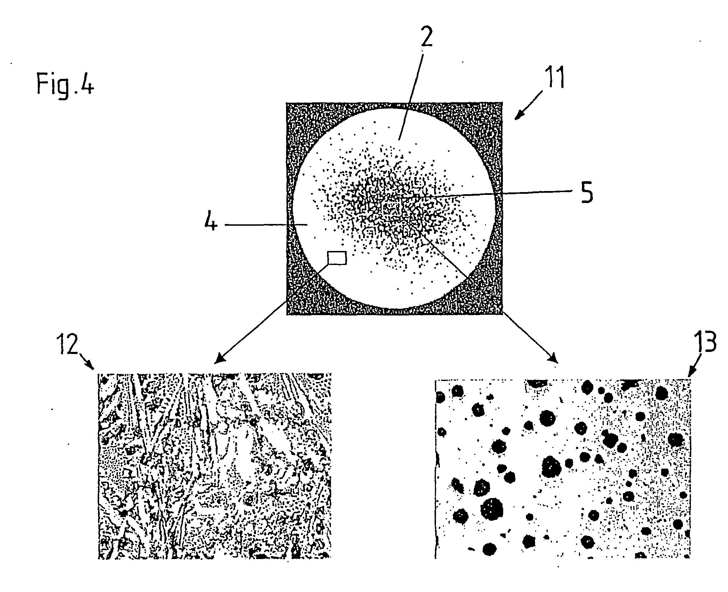

FIG. 4 shows micrographs of piston pin 2, whereby micrograph 11 shows the entire cross-section of the piston pin, micrograph 12 shows the structure of peripheral area 4 of piston pin 2, and micrograph 13 shows the structure of inner region 5 of piston pin 2, in enlarged form. Micrograph 12 of outer, white region 4 of piston pin 2 shows the carbide texture of the ledeburite metal structure, which is formed when the peripheral area of the casting is quickly chilled.

Micrograph 13 clearly shows the graphite which is formed in a globular or spheroid shape as a result of the slow cooling speed.

## Claims

1. A method for producing at least one piston pin (2) having a hard peripheral area (4) comprising the following steps:
(a) embedding a chill form (3, 6, 6') having a mold cavity (9, 10) for at least one piston pin (2) in a casting mold (1);
(b) pouring cast iron into the mold cavity (9, 10) of the chill form (3, 6, 6') to form at least one piston pin (2); and
(c) conducting accelerated cooling of at least a portion of the peripheral area (4) by means of the chill form (3, 6, 6') to form a hard ledeburite structure, **characterized in that** the chill form (6, 6') has in cross section a shape of an "8" and comprises two "E"-shaped halves (7, 7', 8, 8') in cross-section for chill casting at the same time two piston pins (2).

2. The method according to claim 1 wherein the chill form (7', 8') comprises a hollow cylinder having first and second ends (14, 16) and a center region (15) between the end, the ends (14, 16) and the center region (15) having webs for concentrating the chill effect in the peripheral area (4) of the center region and of the ends of the piston pin (2), the center region forming a contact region piston pin (2) to connecting rod, and each end forming a respective contact region piston pin (2) to pin boss.

3. A device for producing at least one piston pin (2) having a hard peripheral area (4) comprising:
(a) a sand mold (1); and
(b) a chill form (3, 6, 6') having a mold cavity (9, 10) embedded on said sand mold (1), **characterized in that** said chill form (6, 6') has in cross section a shape of an "8" and comprises two "E"-shaped halves (7, 7', 8, 8') in cross-section.

4. The device according to claim 3 wherein said chill form (7', 8') comprises a hollow cylinder having first and second ends (14, 16) and a center region (15) between said ends (14, 16), said ends (14, 16) and said center region (15) having webs for concentrating the chill effect in the peripheral area (4) of the center region of the piston pin (2) to form a contact region piston pin (2) to connecting rod and of the ends of the piston pin (2) to form at each end a respective contact region piston pin (2) to pin boss.

## Patentansprüche

1. Verfahren zur Herstellung zumindest eines Kolbenbolzens (2) mit einer gehärteten Schicht am Umfang (4), das die folgenden Schritte umfasst:
(a) Einbetten einer Hartgussform (3, 6, 6') mit einem Guss-Hohlraum (9, 10) für zumindest einen Kolbenbolzen (2) in einen Formkasten (1);
(b) Eingießen von Gusseisen in den Guss-Hohlraum (9, 10) der Hartgussform (3, 6, 6'), um zumindest einen Kolbenbolzen zu formen; und
(c) schnelles Abkühlen von mindestens einem Teil der Schicht am Umfang (4) mittels der Hartgussform (3, 6, 6'), um ein hartes Ledeburit-Gefüge zu erreichen, **dadurch gekennzeichnet, dass** die Hartgussform (6, 6') im Querschnitt die Form einer "8" aufweist und zwei im Querschnitt E-förmige Hälften (7, 7', 8, 8') umfasst, um zwei Kolbenbolzen (2) gleichzeitig nach dem Abschreckverfahren hart zu gießen.

2. Verfahren gemäß Anspruch 1 bei dem die Hartgussform (7', 8') einen Hohlzylinder enthält, welcher erste und zweite Enden (14, 16) sowie einen mittleren Bereich (15) zwischen den Enden besitzt und wobei die Enden (14, 16) sowie der mittlere Bereich (15) Stege aufweisen, um den Abschreck-Effekt der Schicht am Umfang (4) auf die Enden und den mittleren Bereich des Kolbenbolzens (2) zu konzentrieren, wobei der mittlere Bereich einen Kontaktbereich zwischen Kolbenbolzen (2) und Pleuel und jedes der beiden Enden einen Kontaktbereich zwischen Kolbenbolzen (2) und Kolbenbolzenauge bildet.

3. Verfahren zur Herstellung zumindest eines Kolbenbolzens (2) mit einer gehärteten Schicht am Umfang (4), das die folgenden Teile umfasst:
(a) einen Sandformkasten (1); und
(b) eine in den besagten Sandformkasten (1) eingebettete Hartgussform (3, 6, 6') mit einem Guss-Hohlraum (9, 10), **dadurch gekennzeichnet, dass** besagte Hartgussform (6, 6') im Querschnitt die Form einer "8" aufweist und zwei im Querschnitt E-förmige Hälften (7, 7', 8, 8') umfasst.

4. Verfahren gemäß Anspruch 3 bei dem die Hartgussform (7', 8') einen Hohlzylinder enthält, welcher erste und zweite Enden (14, 16) sowie einen mittleren Bereich (15) zwischen den besagten Enden (14, 16) besitzt und wobei die Enden (14, 16) sowie der mittlere Bereich (15) Stege aufweisen, um den Abschreck-Effekt der Schicht am Umfang (4) auf den mittleren Bereich des Kolbenbolzens (2) zu konzentrieren, um einen Kontaktbereich zwischen Kolbenbolzen (2) und Pleuel zu bilden, sowie um ihn auf die Enden des Kolbenbolzens (2) zu konzentrieren, um an jedem Ende einen Kontaktbereich zwischen Kolbenbolzen (2) und Kolbenbolzenauge zu bilden.

## Revendications

1. Procédé pour produire au moins un axe de piston (2) ayant une zone périphérique dure (4) comprenant les étapes suivantes :
(a) encastrer une forme de coquille (3, 6, 6') ayant une cavité de moule (9, 10) pour au moins un axe de piston (2) dans un moule de coulée (1) ;
(b) verser de la fonte dans la cavité de moule (9, 10) de la forme de coquille (3, 6, 6') pour former au moins un axe de piston (2) ; et
(c) réaliser un refroidissement accéléré d'au moins une partie de la zone périphérique (4) au moyen de la forme de coquille (3, 6, 6') pour former une structure de lédeburite dure, **caractérisé en ce que** la forme de coquille (6, 6') a une forme de "8" en coupe transversale et comprend deux moitiés en forme de "E" (7, 7', 8, 8') en coupe transversale pour mouler en coquille simultanément deux axes de piston (2).

2. Procédé selon la revendication 1, dans lequel la forme de coquille (7', 8') comprend un cylindre creux ayant des première et seconde extrémités (14, 16) et une région centrale (15) entre les extrémités, les extrémités (14, 16) et la région centrale (15) ayant des âmes pour concentrer l'effet de trempe dans la zone périphérique (4) de la région centrale et des extrémités de l'axe de piston (2), la région centrale formant une région de contact entre l'axe de piston (2) et une bielle, et chaque extrémité formant une région de contact respective entre l'axe de piston (2) et un bossage d'axe.

3. Dispositif pour produire au moins un axe de piston (2) ayant une zone périphérique dure (4) comprenant :
(a) un moule en sable (1) ; et
(b) une forme de coquille (3, 6, 6') ayant une cavité de moule (9, 10) encastrée sur ledit moule en
sable (1), **caractérisé en ce que** ladite forme de coquille (6, 6') a une forme de "8" en coupe transversale et comprend deux moitiés en forme de "E" (7, 7', 8, 8') en coupe transversale.

4. Dispositif selon la revendication 3, dans lequel ladite forme de coquille (7', 8') comprend un cylindre creux ayant des première et seconde extrémités (14, 16) et une région centrale (15) entre lesdites extrémités (14, 16), lesdites extrémités (14, 16) et ladite région centrale (15) ayant des âmes pour concentrer l'effet de trempe dans la zone périphérique (4) de la région centrale de l'axe de piston (2) pour former une région de contact entre l'axe de piston (2) et une bielle, et des extrémités de l'axe de piston (2) pour former à chaque extrémité une région de contact respective entre l'axe de piston (2) et un bossage d'axe.
